(19) Europäisches Patentamt
European Patent Office
Office européen des brevets

(11) **EP 0 859 548 B1**

(12) **EUROPÄISCHE PATENTSCHRIFT**

(45) Veröffentlichungstag und Bekanntmachung des Hinweises auf die Patenterteilung:
**15.12.2004 Patentblatt 2004/51**

(21) Anmeldenummer: **96932502.6**

(22) Anmeldetag: **12.09.1996**

(51) Int Cl.[7]: **A01N 47/36**

(86) Internationale Anmeldenummer:
**PCT/EP1996/003996**

(87) Internationale Veröffentlichungsnummer:
**WO 1997/010714 (27.03.1997 Gazette 1997/14)**

(54) **HERBIZIDE MISCHUNGEN MIT SYNERGISTISCHER WIRKUNG**

HERBICIDAL MIXTURES HAVING A SYNERGISTIC EFFECT

MELANGES HERBICIDES A ACTION SYNERGIQUES

(84) Benannte Vertragsstaaten:
**AT BE CH DE DK ES FI FR GB GR IE IT LI NL PT SE**
Benannte Erstreckungsstaaten:
**LV SI**

(30) Priorität: **20.09.1995 DE 19534910**

(43) Veröffentlichungstag der Anmeldung:
**26.08.1998 Patentblatt 1998/35**

(60) Teilanmeldung:
**04019639.6 / 1 477 063**

(73) Patentinhaber: **BASF AKTIENGESELLSCHAFT
67056 Ludwigshafen (DE)**

(72) Erfinder:
- **LANDES, Max
D-67161 Gönnheim (DE)**
- **SIEVERNICH, Bernd
D-67459 Böhl-Iggelheim (DE)**
- **KIBLER, Elmar
D-67454 Hassloch (DE)**
- **NUYKEN, Wessel
D-67166 Otterstadt (DE)**
- **WALTER, Helmut
D-67283 Obrigheim (DE)**
- **WESTPHALEN, Karl-Otto
D-67346 Speyer (DE)**
- **MAYER, Horst
D-67069 Ludwigshafen (DE)**
- **HADEN, Egon
D-67259 Kleinniedesheim (DE)**
- **MULDER, Christiaan
Nelspruit 1200 (ZA)**
- **SCHÖNHAMMER, Alfons
D-67271 Mertesheim (DE)**
- **HAMPRECHT, Gerhard
D-69469 Weinheim (DE)**

(56) Entgegenhaltungen:
**EP-A- 0 291 851**
**EP-A- 0 388 873**
**EP-A- 0 446 743**
**WO-A-92/09608**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine herbizide Mischung mit synergistischer Wirkung aus einem Derivat des Sulfonylharnstoffs (a) der Formel I und einem oder mehreren herbiziden Verbindungen.

Sulfonylharnstoffe der Formel I mit herbizider Wirkung sind aus dem Stand der Technik, z.B. aus EP-388 873, EP-559 814, EP-291 851 und DE-40 07 683 und den Conference Proccedings "Fluorine in Agriculture", 9.-11- Januar 1995, Manchester, Kap. "New Fluoro Intermediates for Herbicidal Sulfonylureas" bekannt.

Herbizide Verbindungen sind z.B. in "Herbizide", Hock, Fedtke, Schmidt, 1 Auflage, Thieme 1995 (s. "Quinclorac" S. 238, "Pyrazosulfuron-Ethyl" S. 31, "Bentazon" S. 30, oder in "Agricultural Chemicals" , Book II Herbicides, 1993 S. "Dichlorprop-P" S. 6, "Rimsulfuron" S. 138, oder in "Short Review of Herbicides & PGRs 1991, Hodogaya Chemicals s. "Diflufenican" S. 42, "Fluoroglycofen-Ethyl" S. 146, "Nicolsulfuron" S. 96, "Atrazin" S. 188, ""Terbutylazin" S. 190, beschrieben. Die Verbindung "Caloxydim" ist in DE 3 336 140, die Verbindung "Cinidon-Ethyl" ist in DE 3 603 789 beschrieben.

Bei Pflanzenschutzmitteln ist es grundsätzlich wünschenswert, die spezifische Wirkung eines wirkstoffs und die Wirkungssicherheit zu erhöhen. Der Erfindung lag daher die Aufgabe zugrunde, die Wirkung von bekannten herbizid wirksamen Sulfonylharnstoffen der Formel I zu erhöhen.

Demgemäß wurde eine herbizide Mischung gefunden, die

a) mindestens ein Derivat des Sulfonylharnstoffs der Formel I

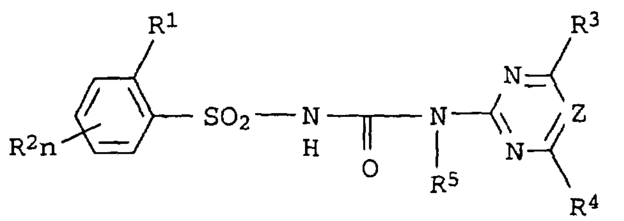

(I),

in der die Substituenten folgende Bedeutung haben:

$R^1$ $C_1$-$C_6$-Alkyl, das eine bis fünf der folgenden Gruppen tragen kann: Methoxy, Ethoxy, $SO_2CH_3$, Cyano, Chlor, Fluor, $SCH_3$, $S(O)CH_3$;
Halogen;
eine Gruppe $ER^6$, in der E O, S oder $NR^7$ bedeutet;
$COOR^8$ ;
$NO_2$ ;
$S(O)_oR^9$, $SO_2NR^{10}R^{11}$, $CONR^{10}R^{11}$;

$R^2$ Wasserstoff, $C_1$-$C_4$-Alkyl, $C_2$-$C_4$-Alkenyl, $C_2$-$C_4$-Alkinyl, Halogen, $C_1$-$C_4$-Alkoxy, $C_1$-$C_4$-Halogenalkoxy; $C_1$-$C_4$-Halogenalkyl, eine $C_1$-$C_2$-Alkylsulfonylgruppe, Nitro, Cyano oder $C_1$-$C_4$-Alkylthio,

$R^3$ F, $CF_3$, $CF_2Cl$,$CF_2H$, $OCF_3$, $OCF_2Cl$ oder falls $R^1$ für $CO_2CH_3$ und gleichzeitig $R^2$ für Fluor stehen, Cl, oder, falls $R^1$ für $CH_2CF_3$ oder $CF_2CF_3$ steht, Methyl, oder falls $R^4$ für $OCF_3$ oder $OCF_2Cl$ steht, $OCF_2H$ oder $OCF_2Br$;

$R^4$ $C_1$-$C_2$-Alkoxy, $C_1$-$C_2$-Alkyl, $C_1$-$C_2$-Alkylthio, $C_1$-$C_2$-Alkylamino, Di-$C_1$-$C_2$-Alkylamino, Halogen, $C_1$-$C_2$-Halogenalkyl, $C_1$-$C_2$-Halogenalkoxy,

$R^5$ Wasserstoff, $C_1$-$C_2$-Alkoxy, $C_1$-$C_4$-Alkyl;

R6 $C_1$-$C_4$-Alkyl, $C_2$-$C_4$-Alkenyl, $C_2$-$C_4$-Alkinyl oder $C_3$-$C_6$-Cycloalkyl, welche 1 bis 5 Halogenatome tragen können, mit Ausnahme von Allyl, Difluormethoxy, Chlordifluormethoxy und 2-Chlorethoxy, falls E O oder S bedeutet.Ferner bedeutet $R^6$ im Falle, daß E für O oder $NR^7$ steht, noch Methylsulfonyl, Ethylsulfonyl, Trifluormethylsulfonyl, Allylsulfonyl, Propargylsulfonyl oder Dimethylsulfamoyl;

$R^7$ Wasserstoff, Methyl oder Ethyl

$R^8$ eine $C_1$-$C_6$-Alkylgruppe, welche bis zu drei der folgenden Reste tragen kann: Halogen, $C_1$-$C_4$-Alkoxy, $C_1$-$C_4$-Alkylthio, $C_1$-$C_4$-Halogenalkoxy, $C_1$-$C_4$-Alkoxy-$C_1$-$C_2$-alkoxy, $C_3$-$C_7$-Cycloalkyl und/oder Phenyl; eine $C_5$-$C_7$-Cycloalkylgruppe, welche bis zu drei $C_1$-$C_4$-Alkylgruppen tragen kann; $C_3$-$C_6$-Alkenyl oder $C_3$-$C_6$-Alkinyl;

$R^9$ eine $C_1$-$C_6$-Alkylgruppe, welche einen bis drei der folgenden Reste tragen kann: Halogen, $C_1$-$C_4$-Alkoxy, $C_1$-$C_4$-Alkylthio, $C_1$-$C_4$-Halogenalkoxy, $C_1$-$C_4$-Alkoxy-$C_1$-$C_2$-alkoxy, $C_3$-$C_7$-Cycloalkyl und/oder Phenyl; eine $C_5$-$C_7$-Cycloalkylgruppe, welche ein bis drei $C_1$-$C_4$-Alkylgruppen tragen kann; eine $C_2$-$C_6$-Alkenylgruppe oder eine $C_3$-$C_6$-Alkinylgruppe;

$R^{10}$ Wasserstoff, eine $C_1$-$C_2$-Alkoxygruppe, eine $C_1$-$C_6$-Alkylgruppe, oder gemeinsam mit $R^{11}$ eine $C_4$-$C_6$-Alkylenkette, worin eine Methylengruppe durch ein Sauerstoffatom oder eine $C_1$-$C_4$-Alkyliminogruppe ersetzt sein kann;

$R^{11}$ eine $C_1$-$C_4$-Alkylgruppe, welche ein bis vier Halogen- oder $C_1$-$C_4$-Alkoxyreste tragen kann; $C_3$-$C_6$-Cycloalkyl

n 0 - 3

o 1 - 2

z N, CH

oder deren umweltverträglichen Salze
und

b) eine synergistisch wirksame Menge mindestens einer herbiziden Verbindung aus der Gruppe
Dichlorprop-P
Mecoprop-P
Ammonium-Bentazon
Bentazon
Diflufenican
Quinclorac
2-(1-[2-(4-Chlorphenoxy)propyloxyimino]butyl)-3-hydroxy-5-(2H-tetrahydrothiopyran-3-yl)-2-cyclohexen-1-on
Caloxydim
Cycloxydim
Sethoxydim
Fluoroglycofen-ethyl
Cinidon-ethyl
Nicosulfuron
Pyrazosulfuron-ethyl
Rimsulfuron
Atrazin
Terbutylazin
oder deren umweltverträglichen Salze enthält.

Die erfindungsgemäße herbizide Mischung zeigt eine überadditive synergistische Wirkung und ist für diejenigen Kulturpflanzen selektiv, für welche die Einzelverbindungen selbst auch verträglich sind.
Im Hinblick auf ihre synergistische herbizide Wirkung besonders bevorzugte Sulfonylharnstoffe der Formel I sind solche, in denen

$R^1$ $CO_2CH_3$,$CO_2C_2H_5$, $CO_2iC_3H_7$, $CF_3$, $CF_2H$; $OSO_2CH_3$, $OSO_2N(CH_3)_2$, Cl, $NO_2$, $SO_2N(CH_3)_2$, $SO_2CH_3$ UND N $(CH_3)SO_2CH_3$

$R^2$ Wasserstoff, Cl, F oder $C_1$-$C_2$-Alkyl

$R^3$ $CF_2H$, $OCF_3$, $OCF_2Cl$, $CF_2Cl$, $CF_3$ oder F

$R^4$ $OCH_3$, $OC_2H_5$, $OCF_3$, $OCF_2Cl$; $CF_3$, Cl, F, $NH(CH_3)$, $N(CH_3)_2$ oder $C_1$-$C_2$-Alkyl

$R^5$ Wasserstoff

z N oder CH

n 0 oder 1 bedeuten.

Bevorzugte Verbindungen der Formel I sind in der folgenden Tabelle zusammengestellt.

Tabelle

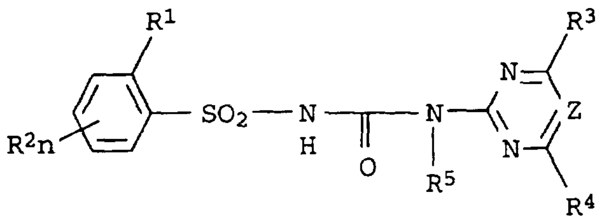

| Nr. | $R^1$ | $R^2$ | $R^5$ | $R^3$ | $R^4$ | Z |
|---|---|---|---|---|---|---|
| 1 | $CO_2CH_3$ | H | H | $OCF_2Cl$ | $OCH_3$ | CH |
| 2 | $CO_2C_2H_5$ | H | H | $OCF_2Cl$ | $OCH_3$ | CH |
| 3 | $CO_2iC_3H_7$ | H | H | $OCF_2Cl$ | $OCH_3$ | CH |
| 4 | $NO_2$ | H | H | $OCF_2Cl$ | $OCH_3$ | CH |

| Nr. | $R^1$ | $R^2$ | $R^5$ | $R^3$ | $R^4$ | Z |
|---|---|---|---|---|---|---|
| 5 | $SO_2CH_3$ | H | H | $OCF_2Cl$ | $OCH_3$ | CH |
| 6 | $SO_2N(CH_3)_2$ | H | H | $OCF_2Cl$ | $OCH_3$ | CH |
| 7 | Cl | H | H | $OCF_2Cl$ | $OCH_3$ | CH |
| 8 | $N(CH_3)SO_2CH_3$ | H | H | $OCF_2Cl$ | $OCH_3$ | CH |
| 9 | $OSO_2CH_3$ | H | H | $OCF_2Cl$ | $OCH_3$ | CH |
| 10 | $OSO_2N(CH_3)_2$ | H | H | $OCF_2Cl$ | $OCH_3$ | CH |
| 11 | $CF_3$ | H | H | $OCF_2Cl$ | $OCH_3$ | CH |
| 12 | $CF_2H$ | H | H | $OCF_2Cl$ | $OCH_3$ | CH |
| 13 | $CO_2CH_3$ | H | H | $OCF_3$ | $OCH_3$ | CH |
| 14 | $CO_2C_2H_5$ | H | H | $OCF_3$ | $OCH_3$ | CH |
| 15 | $CO_2iC_3H_7$ | H | H | $OCF_3$ | $OCH_3$ | CH |
| 16 | $NO_2$ | H | H | $OCF_3$ | $OCH_3$ | CH |
| 17 | $SO_2CH_3$ | H | H | $OCF_3$ | $OCH_3$ | CH |
| 18 | $SO_2N(CH_3)_2$ | H | H | $OCF_3$ | $OCH_3$ | CH |
| 19 | Cl | H | H | $OCF_3$ | $OCH_3$ | CH |
| 20 | $N(CH_3)SO_2CH_3$ | H | H | $OCF_3$ | $OCH_3$ | CH |
| 21 | $OSO_2CH_3$ | H | H | $OCF_3$ | $OCH_3$ | CH |
| 22 | $OSO_2N(CH_3)_2$ | H | H | $OCF_3$ | $OCH_3$ | CH |
| 23 | $CF_3$ | H | H | $OCF_3$ | $OCH_3$ | CH |
| 24 | $CF_2H$ | H | H | $OCF_3$ | $OCH_3$ | CH |
| 25 | $CO_2CH_3$ | H | H | F | $OCH_3$ | CH |
| 26 | $CO_2C_2H_5$ | H | H | F | $OCH_3$ | CH |
| 27 | $CO_2iC_3H_7$ | H | H | F | $OCH_3$ | CH |
| 28 | $NO_2$ | H | H | F | $OCH_3$ | CH |
| 29 | $SO_2CH_3$ | H | H | F | $OCH_3$ | CH |
| 30 | $SO_2N(CH_3)_2$ | H | H | F | $OCH_3$ | CH |
| 31 | Cl | H | H | F | $OCH_3$ | CH |
| 32 | $N(CH_3)SO_2CH_3$ | H | H | F | $OCH_3$ | CH |
| 33 | $OSO_2CH_3$ | H | H | F | $OCH_3$ | CH |
| 34 | $OSO_2N(CH_3)_2$ | H | H | F | $OCH_3$ | CH |
| 35 | $CF_3$ | H | H | F | $OCH_3$ | CH |
| 36 | $CF_2H$ | H | H | F | $OCH_3$ | CH |

| Nr. | $R^1$ | $R^2$ | $R^5$ | $R^3$ | $R^4$ | Z |
|---|---|---|---|---|---|---|
| 37 | $CO_2CH_3$ | H | H | $CF_3$ | $OCH_3$ | N |
| 38 | $CO_2C_2H_5$ | H | H | $CF_3$ | $OCH_3$ | N |
| 39 | $CO_2iC_3H_7$ | H | H | $CF_3$ | $OCH_3$ | N |
| 40 | $NO_2$ | H | H | $CF_3$ | $OCH_3$ | N |
| 41 | $SO_2CH_3$ | H | H | $CF_3$ | $OCH_3$ | N |
| 42 | $SO_2N(CH_3)_2$ | H | H | $CF_3$ | $OCH_3$ | N |
| 43 | Cl | H | H | $CF_3$ | $OCH_3$ | N |
| 44 | $N(CH_3)SO_2CH_3$ | H | H | $CF_3$ | $OCH_3$ | N |
| 45 | $OSO_2CH_3$ | H | H | $CF_3$ | $OCH_3$ | N |
| 46 | $OSO_2N(CH_3)_2$ | H | H | $CF_3$ | $OCH_3$ | N |
| 47 | $CF_3$ | H | H | $CF_3$ | $OCH_3$ | N |
| 48 | $CF_2H$ | H | H | $CF_3$ | $OCH_3$ | N |
| 49 | $CO_2CH_3$ | H | H | $CF_3$ | $OCH_3$ | CH |
| 50 | $CO_2C_2H_5$ | H | H | $CF_3$ | $OCH_3$ | CH |
| 51 | $CO_2iC_3H_7$ | H | H | $CF_3$ | $OCH_3$ | CH |
| 52 | $NO_2$ | H | H | $CF_3$ | $OCH_3$ | CH |
| 53 | $SO_2CH_3$ | H | H | $CF_3$ | $OCH_3$ | CH |
| 54 | $SO_2N(CH_3)_2$ | H | H | $CF_3$ | $OCH_3$ | CH |
| 55 | Cl | H | H | $CF_3$ | $OCH_3$ | CH |
| 56 | $N(CH_3)SO_2CH_3$ | H | H | $CF_3$ | $OCH_3$ | CH |
| 57 | $OSO_2CH_3$ | H | H | $CF_3$ | $OCH_3$ | CH |
| 58 | $OSO_2N(CH_3)_2$ | H | H | $CF_3$ | $OCH_3$ | CH |
| 59 | $CF_3$ | H | H | $CF_3$ | $OCH_3$ | CH |
| 60 | $CF_2H$ | H | H | $CF_3$ | $OCH_3$ | CH |
| 61 | $CO_2CH_3$ | H | H | $CF_2H$ | $OCH_3$ | N |
| 62 | $CO_2C_2H_5$ | H | H | $CF_2H$ | $OCH_3$ | N |
| 63 | $CO_2iC_3H_7$ | H | H | $CF_2H$ | $OCH_3$ | N |
| 64 | $NO_2$ | H | H | $CF_2H$ | $OCH_3$ | N |
| 65 | $SO_2CH_3$ | H | H | $CF_2H$ | $OCH_3$ | N |
| 66 | $SO_2N(CH_3)_2$ | H | H | $CF_2H$ | $OCH_3$ | N |
| 67 | Cl | H | H | $CF_2H$ | $OCH_3$ | N |
| 68 | $N(CH_3)SO_2CH_3$ | H | H | $CF_2H$ | $OCH_3$ | N |

| Nr. | $R^1$ | $R^2$ | $R^5$ | $R^3$ | $R^4$ | Z |
|---|---|---|---|---|---|---|
| 69 | $OSO_2CH_3$ | H | H | $CF_2H$ | $OCH_3$ | N |
| 70 | $OSO_2N(CH_3)_2$ | H | H | $CF_2H$ | $OCH_3$ | N |
| 71 | $CF_3$ | H | H | $CF_2H$ | $OCH_3$ | N |
| 72 | $CF_2H$ | H | H | $CF_2H$ | $OCH_3$ | N |
| 73 | $CO_2CH_3$ | H | H | $CF_2H$ | $OCH_3$ | CH |
| 74 | $CO_2C_2H5$ | H | H | $CF_2H$ | $OCH_3$ | CH |
| 75 | $CO_2iC_3H_7$ | H | H | $CF_2H$ | $OCH_3$ | CH |
| 76 | $NO_2$ | H | H | $CF_2H$ | $OCH_3$ | CH |
| 77 | $SO_2CH_3$ | H | H | $CF_2H$ | $OCH_3$ | CH |
| 78 | $SO_2N(CH_3)_2$ | H | H | $CF_2H$ | $OCH_3$ | CH |
| 79 | Cl | H | H | $CF_2H$ | $OCH_3$ | CH |
| 80 | $N(CH_3)SO_2CH_3$ | H | H | $CF_2H$ | $OCH_3$ | CH |
| 81 | $OSO_2CH_3$ | H | H | $CF_2H$ | $OCH_3$ | CH |
| 82 | $OSO_2N(CH_3)_2$ | H | H | $CF_2H$ | $OCH_3$ | CH |
| 83 | $CF_3$ | H | H | $CF_2H$ | $OCH_3$ | CH |
| 84 | $CF_2H$ | H | H | $CF_2H$ | $OCH_3$ | CH |
| 85 | $CO_2CH_3$ | H | H | $CF_2Cl$ | $OCH_3$ | N |
| 86 | $CO_2C2H_5$ | H | H | $CF_2Cl$ | $OCH_3$ | N |
| 87 | $CO_2iC_3H_7$ | H | H | $CF_2Cl$ | $OCH_3$ | N |
| 88 | $NO_2$ | H | H | $CF_2Cl$ | $OCH_3$ | N |
| 89 | $SO_2CH_3$ | H | H | $CF_2Cl$ | $OCH_3$ | N |
| 90 | $SO_2N(CH_3)_2$ | H | H | $CF_2Cl$ | $OCH_3$ | N |
| 91 | Cl | H | H | $CF_2Cl$ | $OCH_3$ | N |
| 92 | $N(CH_3)SO_2CH_3$ | H | H | $CF_2Cl$ | $OCH_3$ | N |
| 93 | $OSO_2CH_3$ | H | H | $CF_2Cl$ | $OCH_3$ | N |
| 94 | $OSO_2N(CH_3)_2$ | H | H | $CF_2Cl$ | $OCH_3$ | N |
| 95 | $CF_3$ | H | H | $CF_2Cl$ | $OCH_3$ | N |
| 96 | $CF_2H$ | H | H | $CF_2Cl$ | $OCH_3$ | N |
| 97 | $CO_2CH_3$ | 3-F | H | Cl | $OCH_3$ | CH |
| 98 | $CF_2CF_3$ | H | H | $CH_3$ | $OCH_3$ | N |
| 99 | $CF_2CF_3$ | H | H | $CH_3$ | $OCH_3$ | N |
| 100 | $SO_2C_2H_5$ | H | H | F | $OCH_3$ | CH |

Ganz besonders sind folgende Verbindungen b) bevorzugt:

Dichlorprop-P
Mecoprop-P
Ammonium-Bentazon
Bentazon
Diflufenican
Quinclorac
2-(1-[2-(4-Chlorphenoxy)propyloxyimino]butyl)-3-hydroxy-5-(2Htetrahydrothiopyran-3-yl)-2-cyclohexen-1-on
Caloxydim
Cycloxydim
Sethoxydim
Fluoroglycofen-ethyl
Cinidon-ethyl
Nicosulfuron
Pyrazosulfuron-ethyl
Rimsulfuron
Atrazin
Terbutylazin.

Die vorliegende Erfindung ist auch auf herbizide Mittel gerichtet, die mindestens eine herbizid wirksame Menge eines Sulfonylharnstoffs (a) der oben beschriebenen Formel I oder deren umweltverträglichen Salze, eine synergistisch wirksame Menge mindestens einer oben beschriebenen herbiziden Verbindung (b) oder deren umweltverträglichen Salze, mindestens einen flüssigen und/oder festen Trägerstoff und gewünschtenfalls mindestens ein Adjuvant enthalten.

In den erfindungsgemäßen herbiziden Mischungen und herbiziden Mitteln werden die Sulfonylharnstoffe der Formel I oder deren umweltverträglichen Salze und die herbiziden Verbindungen (b) oder deren umweltverträglichen Salze in solchen Gewichtsanteilen verwendet, daß der gewünschte synergistische Effekt auftritt. Vorzugsweise liegen die Mischungsverhältnisse von Sulfonylharnstoff der Formel I und einer herbiziden Verbindung (b) bei 1 : 0.1 bis 1 : 40, insbesondere bei 1 : 0,2 bis 1 : 20, besonders bevorzugt bei 1 : 0,5 bis 1 : 15.

Die erfindungsgemäßen herbiziden Mischungen und herbiziden Mittel aus den Sulfonylharnstoffen der Formel I, bzw. deren umweltverträglichen Salze von beispielsweise Alkalimetallen, Erdalkalimetallen oder Ammoniak und Aminen und die herbiziden Verbindungen (b) bzw. deren umweltverträglichen Salze von beispielsweise Alkalimetallen, Erdalkalimetallen oder Ammoniak und Aminen können in der Kultur Reis, Unkräuter und Schadgräser sehr gut bekämpfen, ohne die Kulturpflanze zu schädigen, ein Effekt, der vor allem auch bei niedrigen Aufwandmengen auftritt.

Unter Berücksichtigung der Vielseitigkeit der Applikationsmethode können die erfindungsgemäßen herbiziden Mischungen und herbiziden Mittel noch in einer weiteren Zahl von Kulturpflanzen zur Beseitigung unerwünschter Pflanzen eingesetzt werden. In Betracht kommen beispielsweise folgende Kulturen:

Allium cepa, Ananas comosus, Arachis hypogaea, Asparagus officinalis, Beta vulgaris spp. altissima, Beta vulgaris spp. rapa, Brassica napus var. napus, Brassica napus var. napobrassica, Brassica rapa var. silvestris, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spp., Manihot esculenta, Medicago sativa, Musa spp., Nicotiana tabacum (N.rustica), Olea europaea, Oryza sativa, Phaseolus lunatus, Phaseolus vulgaris, Picea abies, Pinus spp., Pisum sativum, Prunus avium, Prunus persica, Pyrus communis, Ribes sylestre, Ricinus communis, Saccharum officinarum, Secale cereale, Solanum tuberosum, Sorghum bicolor (s. vulgare), Theobroma cacao, Trifolium pratense, Triticum aestivum, Triticum durum, Vicia faba, Vitis vinifera, Zea mays,

Darüber hinaus können die erfindungsgemäßen herbiziden Mischungen und herbiziden Mittel auch in Kulturen, die durch Züchtung einschließlich gentechnischer Methoden gegen die Wirkung von Herbiziden tolerant sind, verwandt werden.

Die Applikation der erfindungsgemäßen herbiziden Mischungen und herbiziden Mittel kann im Vorauflauf- oder im Nachauflaufverfahren erfolgen. Sind die Wirkstoffe für gewisse Kulturpflanzen weniger verträglich, so können Ausbringungstechniken angewandt werden, bei welchen die herbiziden Mittel mit Hilfe der Spritzgeräte so gespritzt werden, daß die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen (post-directed, lay-by).

Die erfindungsgemäßen Mittel können beispielsweise in Form von direkt versprühbaren wäßrigen Lösungen, Pulvern, Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden.
Die Anwendungsformen richten sich nach den Verwendungszwecken; sie sollten in jedem Fall möglichst die feinste Verteilung der erfindungsgemäßen Wirkstoffe gewährleisten.

Als inerte Zusatzstoffe kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Paraffin, Tetrahydronaphthalin, alkylierte Naphthaline oder deren Derivate, alkylierte Benzole oder deren Derivate, Methanol, Ethanol, Propanol, Butanol, Cyclohexanol, Cyclohexanon oder stark polare Lösungsmittel, wie N-Methylpyrrolidon oder Wasser in Betracht.

Wäßrige Anwendungsformen können aus Emulsionskonzentraten, Suspensionen, Pasten, netzbaren Pulvern oder wasserdispergierbaren Granulaten durch Zusatz von Wasser bereitet werden. Zur Herstellung von Emulsionen, Pasten oder Öldispersionen können die Substrate als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanolen sowie von Fettalkoholglykolether, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylenalkylether, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der herbiziden Mischung mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,01 bis 95 Gew. %, vorzugsweise 0,5 bis 90 Gew. %, der herbiziden Mischung.

Außerdem kann es von Nutzen sein, die erfindungsgemäßen herbiziden Mischungen und herbiziden Mittel auch noch mit weiteren Pflanzenschutzmitteln gemischt, gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate zugesetzt werden. Die Aufwandmengen an reiner herbizider Mischung, d.h. ohne Formulierungshilfsmittel, betragen je nach Bekämpfungsziel, Jahreszeit, Zielpflanzen und Wachstumsstadium 0.01 bis 5 kg/ha, vorzugsweise 0,03 bis 4 kg/ha, besonders bevorzugt 0.1 bis 3.0 kg/ha aktive Substanz (a. S.)

Die erfindungsgemäßen herbiziden Mittel werden den Pflanzen vornehmlich durch Blattspritzung zugeführt. Dabei kann die Ausbringung z.B. mit Wasser als Trägerstoff durch übliche Spritztechniken mit Spritzbrühenmengen von etwa 100 bis 1000 l/ha erfolgen. Eine Anwendung der Mittel im sogenannten "Low Volume"und "Ultra-low-Volume"-Verfahren ist ebenso möglich wie ihre Applikation in Form von sogenannten Granulaten.

Anwendungsbeispiele

Die Applikation der Herbizidmischungen erfolgte im Nachauflaufverfahren (Blattbehandlung), wobei die Sulfonylharnstoffderivate als 10- bis 75prozentige Granulate und die herbiziden Verbindungen (b) in der Formulierung, in der sie als Handelsprodukt vorliegen, ausgebracht wurden.

Es handelt sich um Freilandversuche mit Kleinparzellen auf einem Standort mit sandigem Lehm (pH 6.2 bis 7.0) bzw. sandigem Ton (pH 5.0 bis 6.7) als Boden.

Die Unkräuter hatten unterschiedliche Größen und Entwicklungsstadien, im Durchschnitt hatten sie 5 bis 20 cm je nach Wuchsform.

Die herbiziden Mittel wurden allein und gemeinsam, letzteres teils als Tankmischung, teils in Fertigformulierung, ausgebracht. Dies geschah in Wasser (350 l/ha) als Verteilungsmittel je nach Aufbereitung der Wirkstoffe in Form von Emulsionen, wäßrigen Lösungen oder Suspensionen. Die Ausbringung erfolgte mit Hilfe einer fahrbaren Parzellenspritzmaschine.
Die Versuchsperiode erstreckte sich über 3 bis 8 Wochen, wobei die Bestände auch noch zu späteren Zeiten beobachtet wurden.
Die Schädigung durch die herbiziden Mittel wurde anhand einer Skala von 0 % bis 100 % im Vergleich zu unbehandelten Kontrollparzellen bewertet. Dabei bedeutet 0 keine Schädigung und 100 eine völlige Zerstörung der Pflanzen.
In den folgenden Beispielen wird die Wirkung der erfindungsgemäß verwendbaren herbiziden Mittel gezeigt, ohne die Möglichkeit weiterer Anwendungen auszuschließen.
Bei diesen Beispielen wurde nach der Methode von S. R. Colby (1967): Calculating synergistic and antagonistic responses of herbicid combinations, Weeds 15, 20 ff derjenige Wert E errechnet, der bei einer nur additiven Wirkung der Einzelwirkstoffe zu erwarten ist.
Die Berechnung erfolgt nach

$$E = X + Y - \frac{XY}{100}$$

wobei

X = Prozentsatz Wirkung mit Präparat A bei einer Aufwandmenge a
Y = Prozentsatz Wirkung mit Präparat B bei einer Aufwandmenge b
E = zu erwartende Wirkung (in %) durch A + B bei Aufwandmengen a + b

bedeuten.
Ist der beobachtete Wert höher als der nach Colby errechnete Wert E, so liegt eine synergistische Wirkung vor.
Die erfindungsgemäßen herbiziden Mittel haben eine herbizide Wirkung, die höher ist als sie nach Colby auf Grund der beobachteten Wirkungen der Einzelkomponenten bei alleiniger Anwendung zu erwarten ist.

## Patentansprüche

**1.** Herbizide Mischung, enthaltend

a) mindestens ein Derivat eines Sulfonylharnstoffs der Formel I

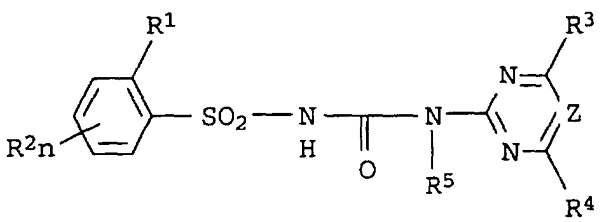

(I),

in der die Substituenten folgende Bedeutung haben:

$R^1$ $C_1$-$C_6$-Alkyl, das eine bis fünf der folgenden Gruppen tragen kann: Methoxy, Ethoxy, $SO_2CH_3$, Cyano, Chlor, Fluor, $SCH_3$, $S(O)CH_3$;
Halogen;
eine Gruppe $ER^6$, in der E O, S oder $NR^7$ bedeutet;
$COOR^8$;
$NO_2$ ;
$S(O)_oR^9$, $SO_2NR^{10}R^{11}$, $CONR^{10}R^{11}$;

$R^2$ Wasserstoff, $C_1$-$C_4$-Alkyl, $C_2$-$C_4$-Alkenyl, $C_2$-$C_4$-Alkinyl, Halogen, $C_1$-$C_4$-Alkoxy, $C_1$-$C_4$-Halogenalkoxy;

$C_1$-$C_4$-Halogenalkyl, eine $C_1$-$C_2$-Alkylsulfonylgruppe, Nitro, Cyano oder $C_1$-$C_4$-Alkylthio;

$R^3$ F, $CF_3$, $CF_2Cl$,$CF_2H$, $OCF_3$, $OCF_2Cl$ oder falls $R^1$ für $CO_2CH_3$ und gleichzeitig $R^2$ für Fluor stehen, Cl, oder, falls $R^1$ für $CH_2CF_3$ oder $CF_2CF_3$ steht, Methyl, oder falls $R^4$ für $OCF_3$ oder $OCF_2Cl$ steht, $OCF_2H$ oder $OCF_2Br$;

$R^4$ $C_1$-$C_2$-Alkoxy, $C_1$-$C_2$-Alkyl, $C_1$-$C_2$-Alkylthio, $C_1$-$C_2$-Alkylamino, Di-$C_1$-$C_2$-Alkylamino, Halogen, $C_1$-$C_2$-Halogenalkyl, $C_1$-$C_2$-Halogenalkoxy,

$R^5$ Wasserstoff, $C_1$-$C_2$-Alkoxy, $C_1$-$C_4$-Alkyl;

R6 $C_1$-$C_4$-Alkyl, $C_2$-$C_4$-Alkenyl, $C_2$-$C_4$-Alkinyl oder $C_3$-$C_6$-Cycloalkyl, welche 1 bis 5 Halogenatome tragen können, mit Ausnahme von Allyl, Difluormethoxy, Chlordifluormethoxy und 2-Chlorethoxy, falls E O oder S bedeutet. Ferner bedeutet $R^6$ im Falle, daß E für O oder $NR^7$ steht, noch Methylsulfonyl, Ethylsulfonyl, Trifluormethylsulfonyl, Allylsulfonyl, Propargylsulfonyl oder Dimethylsulfamoyl;

$R^7$ Wasserstoff, Methyl oder Ethyl

$R^8$ eine $C_1$-$C_6$-Alkylgruppe, welche bis zu drei der folgenden Reste tragen kann: Halogen, $C_1$-$C_4$-Alkoxy, $C_1$-$C_4$-Alkylthio, $C_1$-$C_4$-Halogenalkoxy, $C_1$-$C_4$-Alkoxy-$C_1$-$C_2$-alkoxy, $C_3$-$C_7$-Cycloalkyl und/oder Phenyl; eine $C_5$-$C_7$-Cycloalkylgruppe, welche bis zu drei $C_1$-$C_4$-Alkylgruppen tragen kann; $C_3$-$C_6$-Alkenyl oder $C_3$-$C_6$-Alkinyl;

$R^9$ eine $C_1$-$C_6$-Alkylgruppe, welche einen bis drei der folgenden Reste tragen kann: Halogen, $C_1$-$C_4$-Alkoxy, $C_1$-$C_4$-Alkylthio, $C_1$-$C_4$-Halogenalkoxy, $C_1$-$C_4$-Alkoxy-$C_1$-$C_2$-alkoxy, $C_3$-$C_7$-Cycloalkyl und/oder Phenyl; eine $C_5$-$C_7$-Cycloalkylgruppe, welche ein bis drei $C_1$-$C_4$-Alkylgruppen tragen kann; $C_2$-$C_6$-Alkenyl oder $C_3$-$C_6$-Alkinyl;

$R^{10}$ Wasserstoff, $C_1$-$C_2$-Alkoxy, $C_1$-$C_6$-Alkyl, oder gemeinsam mit $R^{11}$ eine $C_4$-$C_6$-Alkylenkette, worin eine Methylengruppe durch ein Sauerstoffatom oder eine $C_1$-$C_4$-Alkyliminogruppe ersetzt sein kann;

$R^{11}$ eine $C_1$-$C_4$-Alkylgruppe, welche ein bis vier Halogenoder $C_1$-$C_4$-Alkoxyreste tragen kann; $C_3$-$C_6$-Cycloalkyl

n 0 - 3

o 1 - 2

z N, CH

oder deren umweltverträglichen Salze

und

b) eine synergistisch wirksame Menge mindestens einer herbiziden Verbindung aus der Gruppe

Dichlorprop-P
Mecoprop-P
Ammonium-Bentazon
Bentazon
Diflufenican
Quinclorac
2-(2-[2-(4-Chlorphenoxy)propyloxyimino]butyl)-3-hydroxy - 5-(2H-tetrahydrothiopyran-3-yl)-2-cyclohexen-1-on
Caloxydim
Cycloxydim
Sethoxydim
Fluoroglycofen-ethyl
Cinidon-ethyl
Nicosulfuron
Pyrazosulfuron-ethyl

Rimsulfuron
Atrazin
Terbutylazin
oder deren umweltverträgliche Salze.

**2.** Herbizide Mischung nach Anspruch 1, enthaltend einen Sulfonylharnstoff der Formel I, in der

$R^1$ $CO_2CH_3$, $CO_2C_2H_5$, $CO_2iC_3H_7$, $CF_3$, $CF_2H$, $CH_2CF_3$, $CF_2CF_3$, $OSO_2CH_3$, $OSO_2N(CH_3)_2$, Cl, $NO_2$, $SO_2N(CH_3)_2$, $SO_2CH_3$, $SO_2C_2H_5$ und $N(CH_3)SO_2CH_3$,

$R^2$ Wasserstoff, Halogen oder Methyl,

$R^3$ $CF_2H$, $OCF_3$, $OCF_2Cl$, $CF_3$ oder falls $R^1$ für $CO_2CH_3$ und gleichzeitig $R^2$ für Fluor stehen, Cl, oder falls $R^1$ für $F_3$, $CH_2CF_3$ oder $CF_2CF_3$ steht, Methyl,

$R^4$ $OCH_3$, $R^5$ Wasserstoff und

Z N oder CH bedeuten.

**3.** Herbizide Mischung nach Anspruch 1 oder 2, enthaltend einen Sulfonylharnstoff der Formel I, in der

$R^1$ Halogen, eine Gruppe $ER^6$, eine Gruppe $CO_2R^8$, $SO_2CH_3$ oder $SO_2C_2H_5$,

$R^2$ Wasserstoff,

$R^3$ F,

$R^4$ $OCF_3$, $OCF_2Cl$, $OCH_3$,

$R^5$ Wasserstoff,

$R^6$ und $R^8$ die unter Anspruch 1 genannte Bedeutung haben und

Z N oder CH bedeuten.

**4.** Herbizide Mischung nach einem der Ansprüche 1 bis 3, enthaltend einen Sulfonylharnstoff der Formel I, in der

$R^1$ $CF_3$,

$R^2$ Wasserstoff,

$R^3$ $CF_3$,

$R^4$ $OCH_3$,

$R^5$ Wasserstoff und

Z N bedeuten.

**5.** Herbizide Mischung nach einem der Ansprüche 1 bis 4, enthaltend einen Sulfonylharnstoff (a) der Formel I und einen oder mehrere herbizide Verbindungen (b) im Gewichtsverhältnis 1 : 0,1 bis 1 : 40.

**6.** Herbizide Mischung nach Anspruch 5, enthaltend einen Sulfonylharnstoff (a) der Formel I und einen oder mehrere herbizide Verbindungen (b) im Gewichtsverhältnis 1 : 0,2 bis 1 : 20.

**7.** Herbizides Mittel, enthaltend eine herbizid wirksame Menge eines Sulfonylharnstoffs (a) der Formel I gemäß einem der Ansprüche 1 bis 4, eine synergistisch wirksame Menge mindestens einer herbiziden Verbindung (b) gemäß Anspruch 1, mindestens einen flüssigen und/oder festen Trägerstoff und gewünschtenfalls mindestens ein Adjuvants.

**8.** Herbizides Mittel nach Anspruch 7, **dadurch gekennzeichnet, daß** es den Sulfonylharnstoff (a) der Formel I und einen oder mehrere herbizide Verbindungen (b) im Gewichtsverhältnis 1 : 0,1 bis 1 : 40 enthält.

**9.** Herbizides Mittel nach Anspruch 7 oder 8, **dadurch gekennzeichnet, daß** es den Sulfonylharnstoff (a) der Formel I und einen oder mehrere herbizide Verbindungen (b) im Gewichtsverhältnis 1 : 0,2 bis 1 : 20 enthält.

**10.** Verfahren zur Bekämpfung unerwünschten Pflanzenwuchses, **dadurch gekennzeichnet, daß** man einen Sulfonylharnstoff (a) der Formel I gemäß einem der Ansprüche 1 bis 4 und einen oder mehrere herbizide Verbindungen (b) gemäß Anspruch 1 in einer synergistisch wirksamen Menge vor, während und/oder nach dem Auflaufen von unerwünschten Pflanzen gleichzeitig oder nacheinander ausbringt.

**11.** Verfahren zur Bekämpfung unerwünschten Pflanzenwuchses, **dadurch gekennzeichnet, daß** man die Blätter der Kulturpflanzen und der unerwünschten Pflanzen mit einem Sulfonylharnstoff (a) der Formel I gemäß einem der Ansprüche 1 bis 4 und einem oder mehreren Verbindungen (b) gemäß Anspruch 1 in einer synergistisch wirksamen Menge gleichzeitig oder nacheinander behandelt.

## Claims

**1.** A herbicidal mixture comprising

a) at least one derivative of a sulfonylurea of the formula I

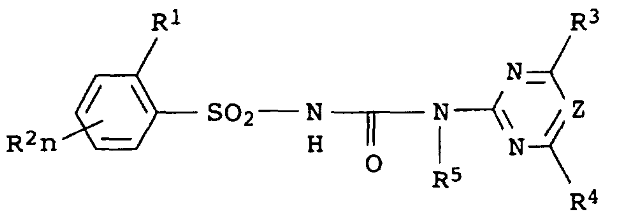

(I),

where the substituents have the following meanings:

$R^1$ is $C_1$-$C_6$-alkyl which has attached to it one to five of the following groups: methoxy, ethoxy, $SO_2CH_3$, cyano, chlorine, fluorine, $SCH_3$, $S(O)CH_3$;
halogen;
a group $ER^6$ where E is O, S or $NR^7$;
$COOR^8$;
$NO_2$;
$S(O)_oR^9$, $SO_2NR^{10}R^{11}$, $CONR^{10}R^{11}$;

$R^2$ is hydrogen, $C_1$-$C_4$-alkyl, $C_2$-$C_4$-alkenyl, $C_2$-$C_4$-alkynyl, halogen, $C_1$-$C_4$-alkoxy, $C_1$-$C_4$-haloalkoxy; $C_1$-$C_4$-haloalkyl, a $C_1$-$C_2$-alkylsulfonyl group, nitro, cyano or $C_1$-$C_4$-alkylthio;

$R^3$ is F, $CF_3$, $CF_2Cl$, $CF_2H$, $OCF_3$, $OCF_2Cl$, or, if $R^1$ is $CO_2CH_3$ and $R^2$ is simultaneosly fluorine, $R^3$ is Cl, or, if $R^1$ is $CH_2CF_3$ or $CF_2CF_3$, $R^3$ is methyl, or, if $R^4$ is $OCF_3$ or $OCF_2Cl$, $R^3$ is $OCF_2H$ or $OCF_2Br$;

$R^4$ is $C_1$-$C_2$-alkoxy, $C_1$-$C_2$-alkyl, $C_1$-$C_2$-alkylthio, $C_1$-$C_2$-alkylamino, di-$C_1$-$C_2$-alkylamino, halogen, $C_1$-$C_2$-haloalkyl, $C_1$-$C_2$-haloalkoxy,

$R^5$ is hydrogen, $C_1$-$C_2$-alkoxy, $C_1$-$C_4$-alkyl;

$R^6$ is $C_1$-$C_4$-alkyl, $C_2$-$C_4$-alkenyl, $C_2$-$C_4$-alkynyl or $C_3$-$C_6$-cycloalkyl, all of which can have attached to them 1 to 5 halogen atoms, with the exception of allyl, difluoromethoxy, chlorodifluoromethoxy and 2-chloroethoxy, if E is O or S. In the event that E is O or $NR^7$, $R^6$ is furthermore also methylsulfonyl, ethylsulfonyl, trifluoromethylsulfonyl, allylsulfonyl, propargylsulfonyl or dimethylsulfamoyl;

$R^7$ is hydrogen, methyl or ethyl

$R^8$ is a $C_1$-$C_6$-alkyl group which can have attached to it up to three of the following radicals: halogen, $C_1$-$C_4$-alkoxy, $C_1$-$C_4$-alkylthio, $C_1$-$C_4$-haloalkoxy, $C_1$-$C_4$-alkoxy-$C_1$-$C_2$-alkoxy, $C_3$-$C_7$-cycloalkyl and/or phenyl; a $C_5$-$C_7$-cycloalkyl group which can have attached to it up to three $C_1$-$C_4$-alkyl groups; $C_3$-$C_6$-alkenyl or $C_3$-$C_6$-alkynyl;

$R^9$ is a $C_1$-$C_6$-alkyl group which can have attached to it one to three of the following radicals: halogen, $C_1$-$C_4$-alkoxy, $C_1$-$C_4$-alkylthio, $C_1$-$C_4$-haloalkoxy, $C_1$-$C_4$-alkoxy-$C_1$-$C_2$-alkoxy, $C_3$-$C_7$-cycloalkyl and/or phenyl; a $C_5$-$C_7$-cycloalkyl group which can have attached to it one to three $C_1$-$C_4$-alkyl groups; $C_3$-$C_6$-alkenyl or $C_3$-$C_6$-alkynyl;

$R^{10}$ is hydrogen, $C_1$-$C_2$-alkoxy, $C_1$-$C_6$-alkyl, or together with $R^{11}$ is a $C_4$-$C_6$-alkylene chain in which one methylene group can be replaced by an oxygen atom or a $C_1$-$C_4$-alkylimino group;

$R^{11}$ is a $C_1$-$C_4$-alkyl group which can have attached to it one to four halogen or $C_1$-$C_4$-alkoxy radicals; $C_3$-$C_6$-cycloalkyl

n is 0 - 3

o is 1 - 2

Z is N or CH,

or their environmentally compatible salts

and

b) a synergistically active amount of at least one herbicidal compound selected from group
dichlorprop-P
mecoprop-P
ammonium-bentazone
bentazone
diflufenican
quinclorac
2-(1-[2-(4-chlorophenoxy)propyloxyimino]butyl)-3-hydroxy-5-(2H-tetrahydrothiopyran-3-yl)-2-cyclohexen-1-one caloxydim
cycloxydim
sethoxydim
fluoroglycofen-ethyl
cinidon-ethyl
nicosulfuron
pyrazosulfuron-ethyl
rimsulfuron
atrazine
terbutylazine
or their environmentally compatible salts.

**2.** A herbicidal mixture as claimed in claim 1, comprising a sulfonylurea of the formula I where

$R^1$ is $CO_2CH_3$, $CO_2C_2H_5$, $CO_2iC_3H_7$, $CF_3$, $CF_2H$, $CH_2CF_3$, $CF_2CF_3$, $OS0_2CH_3$, $OSO_2N(CH_3)_2$, Cl, $NO_2$, $SO_2N(CH_3)_2$, $SO_2CH_3$, $SO_2C_2H_5$ and $N(CH_3)SO_2CH_3$,

$R^2$ is hydrogen, halogen or methyl,

$R^3$ is $CF_2H$, $OCF_3$, $OCF_2Cl$, $CF_3$, or, if $R^1$ is $CO_2CH_3$ and $R^2$ is simultaneously fluorine, $R^3$ is Cl, or, if $R^1$ is $F_3$,

$CH_2CF_3$ or $CF_2CF_3$, $R^3$ is methyl,

$R^4$ is $OCH_3$,

$R^5$ is hydrogen and

Z is N or CH.

**3.** A herbicidal mixture as claimed in claim 1 or 2, comprising a sulfonylurea of the formula I where

$R^1$ is halogen, a group $ER^6$, a group $CO_2R^8$, $SO_2CH_3$ or $SO_2C_2H_5$,

$R^2$ is hydrogen,

$R^3$ is F,

$R^4$ is $OCF_3$, $OCF_2Cl$, $OCH_3$,

$R^5$ is hydrogen,

$R^6$ and $R^8$ have the meanings given in claim 1 and

Z is N or CH.

**4.** A herbicidal mixture as claimed in any of claims 1 to 3, comprising a sulfonylurea of the formula I where

$R^1$ is $CF_3$,

$R^2$ is hydrogen,

$R^3$ is $CF_3$,

$R^4$ is $OCH_3$,

$R^5$ is hydrogen and

Z is N.

**5.** A herbicidal mixture as claimed in any of claims 1 to 4, comprising a sulfonylurea (a) of the formula I and one or more herbicidal compounds (b) in a weight ratio of 1:0.1 to 1:40.

**6.** A herbicidal mixture as claimed in claim 5, comprising a sulfonylurea (a) of the formula I and one or more herbicidal compounds (b) in a weight ratio of 1:0.2 to 1:20.

**7.** A herbicidal composition comprising a herbicidally active amount of a sulfonylurea (a) of the formula I as claimed in any of claims 1 to 4, a synergistically active amount of at least one herbicidal compound (b) as claimed in claim 1, at least one liquid and/or solid carrier and, if desired, at least one adjuvant.

**8.** A herbicidal composition as claimed in claim 7, which comprises the sulfonylurea (a) of the formula I and one or more herbicidal compounds (b) in a weight ratio of 1:0.1 to 1:40.

**9.** A herbicidal composition as claimed in claim 7 or 8, which comprises the sulfonylurea (a) of the formula I and one or more herbicidal compounds (b) in a weight ratio of 1:0.2 to 1:20.

**10.** A method of controlling undesirable vegetation, which comprises applying a synergistically active amount of a sulfonylurea (a) of the formula I as set forth in any of claims 1 to 4 and of one or more herbicidal compounds (b) as set forth in claim 1 before, during and/or after the emergence of undesirable plants, either simul- taneously or in succession.

11. A method of controlling undesirable vegetation, which comprises treating the leaves of the crop plants and of the undesirable plants with a synergistically active amount of a sulfonylurea (a) of the formula I as set forth in any of claims 1 to 4 and of one or more compounds (b) as set forth in claim 1, either simultaneously or in succession.

## Revendications

1. Mélange herbicide contenant

a) au moins un dérivé d'une sulfonylurée répondant à la formule 1

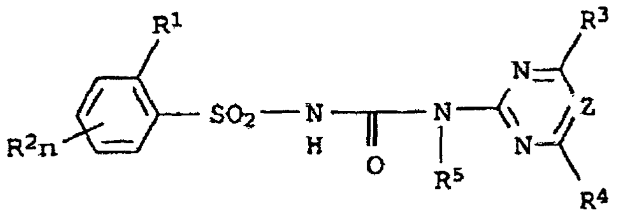 (I),

dans laquelle les substituants ont la signification suivante :

$R^1$ représente un groupe alkyle en $C_1$-$C_6$ qui peut porter de 1 à 5 groupes choisis parmi les groupes suivants : un groupe méthoxy, un groupe éthoxy, un groupe $SO_2CH_3$, un groupe cyano, un atome de chlore, un atome de fluor, un groupe $SCH_3$, un groupe $S(O)CH_3$ ;
un atome d'halogène ;
un groupe $ER^6$ dans lequel E représente un atome d'oxygène, un atome de soufre ou un groupe $NR^7$ ;
un groupe $COOR^8$ ;
un groupe $NO_2$ ;
un groupe $S(O)_oR^9$, un groupe $SO_2NR^{10}R^{11}$, un groupe $CONR^{10}R^{11}$;

$R^2$ représente un atome hydrogène, un groupe alkyle en $C_1$-$C_4$, un groupe alcényle en $C_2$-$C_4$, un groupe alcynyle en $C_2$-$C_4$, un atome d'halogène, un groupe alcoxy en $C_1$-$C_4$, un groupe halogénoalcoxy en $C_1$-$C_4$, un groupe halogénoalkyle en $C_1$-$C_4$, un groupe alkyl(en $C_1$-$C_2$)-sulfonyle, un groupe nitro, un groupe cyano ou un groupe alkyl(en $C_1$-$C_4$)thio ;

$R^3$ représente un atome de fluor, un groupe $CF_3$, un groupe $CF_2Cl$, un groupe $CF_2H$, un groupe $OCF_3$, un groupe $OCF_2Cl$ ou bien, au cas où $R^1$ représente un groupe $CO_2CH_3$ et de manière simultanée $R^2$ représente un atome de fluor, représente un atome de chlore, ou bien, au cas où $R^1$ représente un groupe $CH_2CF_3$ ou un groupe $CF_2CF_3$, représente un groupe méthyle, ou bien, au cas où $R^4$ représente un groupe $OCF_3$ ou un groupe $OCF_2Cl$, représente un groupe $OCF_2H$ ou un groupe $OCF_2Br$ ;

$R^4$ représente un groupe alcoxy en $C_1$-$C_2$, un groupe alkyle en $C_1$-$C_2$, un groupe alkyl(en $C_1$-$C_2$)thio, un groupe alkyl(en $C_1$-$C_2$)amino, un groupe dialkyl(en $C_1$-$C_2$)amino, un atome d'halogène, un groupe halogénoalkyle en $C_1$-$C_2$, un groupe halogénoalcoxy en $C_1$-$C_2$ ;

$R^5$ représente un atome hydrogène, un groupe alcoxy en $C_1$-$C_2$, un groupe alkyle en $C_1$-$C_4$ ;

$R^6$ représente un groupe alkyle en $C_1$-$C_4$, un groupe alcényle en $C_2$-$C_4$, un groupe alcynyle en $C_2$-$C_4$ ou un groupe cycloalkyle en $C_3$-$C_6$, qui peuvent porter de 1 à 5 atomes d'halogène, à l'exception d'un groupe allyle, d'un groupe difluorométhoxy, d'un groupe chlorodifluoro-méthoxy et d'un groupe 2-chloroéthoxy, au cas où E représente un atome d'oxygène ou un atome de soufre, en outre, $R^6$ représente, dans le cas où E représente un atome d'oxygène ou un groupe $NR^7$, encore un groupe méthylsulfonyle, un groupe éthylsulfonyle, un groupe trifluorométhylsulfonyle, un groupe allylsulfonyle, un groupe propargylsulfonyle ou un groupe diméthyl-sulfamoyle ;

$R^7$ représente un atome hydrogène, un groupe méthyle ou un groupe éthyle ;

$R^8$ représente un groupe alkyle en $C_1$-$C_6$ qui peut porter jusqu'à trois radicaux parmi ceux repris ci-après : un atome d'halogène, un groupe alcoxy en $C_1$-$C_4$, un groupe alkyl(en $C_1$-$C_4$)thio, un groupe halogénalcoxy en $C_1$-$C_4$, un groupe alcoxy(en $C_1$-$C_4$)alcoxy en $C_1$-$C_2$, un groupe cycloalkyle en $C_3$-$C_7$ et/ou un groupe phényle ; un groupe cycloalkyle en $C_5$-$C_7$ qui peut porter jusqu'à trois groupes alkyle en $C_1$-$C_4$; un groupe alcényle en $C_3$-$C_6$ ou un groupe alcynyle en $C_3$-$C_6$;

$R^9$ représente un groupe alkyle en $C_1$-$C_6$ qui peut porter de un à trois radicaux parmi ceux repris ci-après : un atome d'halogène, un groupe alcoxy en $C_1$-$C_4$, un groupe alkyl(en $C_1$-$C_4$)thio, un groupe halogénalcoxy en $C_1$-$C_4$, un groupe alcoxy(en $C_1$-$C_4$)alcoxy en $C_1$-$C_2$, un groupe cycloalkyle en $C_3$-$C_7$ et/ou un groupe phényle ; un groupe cycloalkyle en $C_5$-$C_7$ qui peut porter de un à trois groupes alkyle en $C_1$-$C_4$ ; un groupe alcényle en $C_2$-$C_6$ ou un groupe alcynyle en $C_3$-$C_6$;

$R^{10}$ représente un atome hydrogène, un groupe alcoxy en $C_1$-$C_2$, un groupe alkyle en $C_1$-$C_6$, ou représente ensemble avec $R^{11}$ une chaîne alkylène en $C_4$-$C_6$ dans laquelle un groupe méthylène peut être remplacé par un atome d'oxygène ou par un groupe alkyl(en $C_1$-$C_4$)imino ;

$R^{11}$ représente un groupe alkyle en $C_1$-$C_4$ qui peut porter de un à quatre radicaux halogène ou alcoxy en $C_1$-$C_4$ ; un groupe cycloalkyle en $C_3$-$C_6$ ;

n est égal à 0 - 3 ;

o est égal à 1 - 2 ;

Z représente un atome d'azote, un groupe CH,

ou leurs non polluants

et

b) une quantité efficace du point de vue synergique d'au moins un composé herbicide choisi parmi le groupe comprenant
dichlorprop-P
mecoprop-P
ammonium-bentazon
bentazon
diflufenican
quinclorac
la 2-(1-[2-(4-chlorophénoxy)propyloxyimino]butyl)-3-hydroxy-5-(2H-tétrahydrothiopyrane-3-yl)-2-cyclohexén-1-one
caloxydim
cydoxydim
sethoxydim
fluoroglycofen-éthyle
cinidon-éthyle
nicosulfuron
pyrazosulfuron-éthyle
rimsulfuron
atrazine
terbutylazine

ou leurs sels non polluants.

**2.** Mélange herbicide selon la revendication 1, contenant une sulfonylurée répondant à la formule I, dans laquelle

$R^1$ représente un groupe $CO_2CH_3$, un groupe $CO_2C_2H_5$, un groupe $C0_2iC_3H_7$, un groupe $CF_3$, un groupe $CF_2H$, un groupe $CH_2CF_3$, un groupe $CF_2CF_3$, un groupe $OS0_2CH_3$, un groupe $OS0_2N(CH_3)_2$, un atome de chlore, un groupe $NO_2$, un groupe $SO_2N(CH_3)_2$, un groupe $SO_2CH_3$, un groupe $SO_2C_2H_5$ et un groupe N $(CH)_3SO_2CH_3$ ;

$R^2$ représente un atome d'hydrogène, un atome d'halogène ou un groupe méthyle ;

$R^3$ représente un groupe $CF_2H$, un groupe $OCF_3$, un groupe $OCF_2Cl$, un groupe $CF_3$, ou bien, au cas où $R^1$ représente un groupe $CO_2CH_3$ et de manière simultanée $R^2$ représente un atome de fluor, représente un atome de chlore, ou bien, au cas où $R^1$ représente un groupe $F_3$, un groupe $CH_2CF_3$ ou un groupe $CF_2CF_3$, représente un groupe méthyle,

$R^4$ représente un groupe $OCH_3$, $R^5$ représente un atome d'hydrogène, et

Z représente un atome d'azote ou un groupe CH.

**3.** Mélange herbicide selon la revendication 1 ou 2, contenant une sulfonylurée répondant à la formule I, dans laquelle

$R^1$ représente un atome d'halogène, un groupe $ER^6$, un groupe $CO_2R^8$, un groupe $SO_2CH_3$ ou un groupe $SO_2C_2H_5$ ;

$R^2$ représente un atome d'hydrogène ;

$R^3$ représente un atome de fluor ;

$R^4$ représente un groupe $OCF_3$, un groupe $OCF_2Cl$, un groupe $OCH_3$ ;

$R^5$ représente un atome d'hydrogène ;

$R^6$ et $R^8$ ont la signification mentionnée à la revendication 1, et

Z représente un atome d'azote ou un groupe CH.

**4.** Mélange herbicide selon l'une quelconque des revendications 1 à 3, contenant une sulfonylurée répondant à la formule I, dans laquelle

$R^1$ représente un groupe $CF_3$ ;

$R^2$ représente un atome d'hydrogène ;

$R^3$ représente un groupe $CF_3$ ;

$R^4$ représente un groupe $OCH_3$ ;

$R^5$ représente un atome d'hydrogène, et

Z représente un atome d'azote.

**5.** Mélange herbicide selon l'une quelconque des revendications 1 à 4, contenant une sulfonylurée (a) répondant à la formule I et un ou plusieurs composés herbicides (b) dans le rapport pondéral de 1 : 0,1 à 1 : 40.

**6.** Mélange herbicide selon la revendication 5, contenant une sulfonylurée (a) répondant à la formule 1 et un ou plusieurs composés herbicides (b) dans le rapport pondéral de 1 : 0,2 à 1 : 20.

**7.** Agent herbicide contenant une quantité efficace du point de vue herbicide d'une sulfonylurée (a) répondant à la formule I selon l'une quelconque des revendications 1 à 4, une quantité efficace du point de vue synergique d'au moins un composé herbicide (b) selon la revendication 1, au moins une substance de support liquide et/ou solide et, le cas échéant, au moins un adjuvant.

**8.** Agent herbicide selon la revendication 7, **caractérisé en ce qu'**il contient une sulfonylurée (a) répondant à la formule I et un ou plusieurs composés herbicides (b) dans le rapport pondéral de 1 : 0,1 à 1 : 40.

**9.** Agent herbicide selon la revendication 7 ou 8, **caractérisé en ce qu'**il contient une sulfonylurée (a) répondant à

la formule I et un ou plusieurs composés herbicides (b) dans le rapport pondéral de 1 : 0,2 à 1 : 20.

**10.** Procédé pour lutter contre la croissance non désirée de plantes, **caractérisé en ce qu'**on procède à l'épandage d'une sulfonylurée (a) répondant à la formule I selon l'une quelconque des revendications 1 à 4 et d'un ou de plusieurs composés herbicides (b) selon la revendication 1 en une quantité efficace du point de vue synergique, avant, pendant et/ou après l'émergence de plantes non désirées, de manière simultanée ou de manière successive.

**11.** Procédé pour lutter contre la croissance non désirée de plantes, **caractérisé en ce qu'**on traite les feuilles des plantes de culture et des plantes non désirées avec une sulfonylurée (a) répondant à la formule I selon l'une quelconque des revendications 1 à 4 et avec un ou plusieurs composés (b) selon la revendication 1 en une quantité efficace du point de vue synergique, de manière simultanée ou de manière successive.